# EUROPÄISCHE PATENTSCHRIFT

(11) **EP 1 985 396 B1**
(45) Veröffentlichungstag und Bekanntmachung des Hinweises auf die Patenterteilung: **17.03.2010**
(21) Anmeldenummer: 07008460.3
(22) Anmeldetag: 25.04.2007
(51) Int. Cl.: B23C 9/00, B23Q 1/54, B23Q 5/04, B23Q 11/00, B23Q 17/00, B27C 9/00

(54) **Einwechselbares Werkzeugaggregat**
Interchangeable tool assembly
Ensemble d'outils interchangeable

(43) Veröffentlichungstag der Anmeldung: 29.10.2008
(73) Patentinhaber: Homag Holzbearbeitungssysteme AG, 72296 Schopfloch (DE)
(72) Erfinder: Sturm, Gotthilf, 72293 Glatten (DE); Zeller, Christoph, 77756 Hausach (DE); Kimmig, Clemens, 77728 Oppenau (DE); Gauss, Achim, 72280 Dornstetten/Hallwangen (DE)
(74) Vertreter: HOFFMANN EITLE

(56) Entgegenhaltungen:
- EP-A- 0 758 569
- DE-A1- 3 243 112
- DE-A1- 3 619 071
- DE-B3-102005 032 487

## Beschreibung

### Technisches Gebiet

Die vorliegende Erfindung betriff ein einwechselbares Werkzeugaggregat zum Bearbeiten von Werkstücken, die bevorzugt zumindest abschnittsweise aus Holz, Holzwerkstoffen, Kunststoff oder dergleichen bestehen, nach dem Oberbegriff von Anspruch 1.

### Stand der Technik

Werkzeugaggregate werden beispielsweise im Bereich der Möbelherstellung vielfältig zum meist spanenden Bearbeiten wie Bohren, Fräsen, etc. von Werkstücken verwendet. Die Werkzeugaggregate zeichnen sich dadurch aus, dass sie eine Werkzeugaufnahme besitzen, in die je nach gewünschter Bearbeitung unterschiedliche Bearbeitungswerkzeuge bzw. Werkzeugadapter (nachfolgend wird vereinfacht nur von Bearbeitungswerkzeugen gesprochen) eingewechselt werden können.

Um die Flexibilität von Bearbeitungsmaschinen weiter zu erhöhen, ist es ebenfalls bekannt, ein Werkzeugaggregat selbst einwechselbar auszugestalten, indem das Werkzeugaggregat mit einer Schnittstelle ausgestattet wird, mittels der das Werkzeugaggregat in eine Schnittstelle einer Spindeleinheit oder dergleichen eingewechselt werden kann. Ein derartiges einwechselbares Werkzeugaggregat ist beispielsweise in der DE 10 2005 032 487 B3 offenbart.

Wenn Bearbeitungswerkzeuge in die Aufnahme der bekannten Werkzeugaggregate automatisch eingewechselt werden, erfolgt ein Spannen der Bearbeitungswerkzeuge in der Aufnahme mittels eines oder mehrerer Halteelemente, wobei die Aufnahme beispielsweise als HSK-Aufnahme (Hohlschaftkegel-Aufnahme) ausgebildet sein kann.

Beim automatischen Einwechseln von Bearbeitungswerkzeugen besteht eine erhöhte Gefahr, dass das Bearbeitungswerkzeug verkantet, so dass das Bearbeitungswerkzeug nicht zuverlässig gespannt werden kann. Diese Gefahr wird im Bereich spanender Bearbeitung durch die teilweise erheblichen Verschmutzungen im Bearbeitungsbereich weiter erhöht. Dabei ist zu beachten, dass gattungsgemäße Werkzeugaggregate meist mit sehr hohen Drehzahlen betrieben werden, so dass einem zuverlässigen Spannen der Bearbeitungswerkzeuge nicht nur hinsichtlich der Bearbeitungsqualität, sondern auch hinsichtlich der Betriebssicherheit hohe Bedeutung zukommt.

Die DE 10 2005 032 487 B3 zeigt ein einwechselbares Werkzeugaggregat zur Anordnung an der Spindel einer Werkzeugmaschine, mit einem koaxial zur Spindelachse rotierbarem Trägerteil, an dem eine Werkzeugaufnahme um eine senkrecht zur Spindelachse ausgerichtete Schwenkachse verschwenkbar gelagert ist, und mit einer Schwenkmechanik, die mit der Werkzeugaufnahme gekoppelt ist zum Verschwenken derselben. Die Schwenkmechanik weist ein Drehteil auf, dass um eine parallel zur Spindelachse ausgerichtete Drehachse drehbar gelagert und über ein Getriebe mit der Werkzeugaufnahme gekoppelt ist, wobei das Drehteil mit einem Maschinenteil der Werkzeugmaschine verbindbar und durch eine Relativbewegung zwischen dem Trägerteil und dem Maschinenteil um seine Drehachse in Drehung versetzbar ist.

Die EP 0 758 569 A1 zeigt eine Spindeleinrichtung zum Erfassen der Beendigung eines automatischen Werkzeugwechselverfahrens, die eine Spindel, welche einen an deren vorderem Ende ausgebildeten Werkzeughalteabschnitt hat, einen Zugbolzen mit einem Durchgangsloch, durch das Luft in die Umgebung des Werkzeughalteabschnitts der Spindel geblasen werden kann, und ein Druckerfassungsmittel umfasst, welches in Verbindung mit dem Durchgangsloch des Zugbolzens angeordnet ist.

Die DE 36 19 071 A1 offenbart eine Bearbeitungsmaschine mit einem Schwenkkopf in dessen Gehäuse eine Werkzeugspindel drehbar gelagert ist. Sie weist eine Werkzeugaufnahme, sowie eine axial verschiebbare Zugstange auf, durch die eine bis in den Arbeitsbereich des eingespannten Werkzeugs reichende Kühlmittelbohrung verläuft. Diese schließt an eine Leitung in einem im Spindelkopfgehäuse verschiebbaren Übergangskolben an, dessen Anschlussbereich zwischen der Kühlmittelbohrung und der Leitung in jeder Stellung des Übergabekolbens abgedichtet ist. Die Leitung ist mit einer Kühlmittelzuführung verbunden.

Die DE 32 43 112 A1 offenbart eine Durchflusssteuereinrichtung für Gas und für Flüssigmedien in einer Werkzeugmaschinenarbeitsspindel, in der ein Werkzeug mit Steilkegelschaft und darin eine bis zur Werkzeugschneide verlaufende Kühlmittelbohrung aufnehmbar ist. Die Spindel ist mit einer in der Arbeitsspindel konzentrisch angebrachten Zugstange, sowie mit einem durch Arbeitsspindel, Zugstange und Steilkegelschaft gebildeten System versehen, durch dessen Mitte die Gas und Flüssigmedien der Werkzeugschneide zugeführt werden. Die Zugstange ist an ihrem werkzeugseitigen Ende als Zylinder zur Aufnahme eines Kolbens ausgebildet, wobei der Kolben eine konzentrische Bohrung und werkzeugseitig ein mit einer Dichtfläche am Spannbolzen zusammenarbeitendes Dichtelement besitzt. Die konzentrische Bohrung des Kolbens ist mit einem Kugelventil verschließbar.

### Darstellung der Erfindung

Es ist daher Aufgabe der vorliegenden Erfindung, ein einwechselbares Werkzeugaggregat der eingangs genannten Art bereitzustellen, das bei einfacher Konstruktion ein zuverlässiges Spannen der Bearbeitungswerkzeuge sicherstellt.

Diese Aufgabe wird erfindungsgemäß durch ein einwechselbares Werkzeugaggregat nach Anspruch 1 gelöst. Besonders vorteilhafte Weiterbildungen der Erfindung sind in den abhängigen Ansprüchen angegeben.

Der Erfindung liegt der Gedanke zugrunde, eine Überprüfung des Spannzustandes der Bearbeitungswerkzeuge bzw. Werkzeugadapter (nachfolgend wird vereinfacht nur von Bearbeitungswerkzeugen gesprochen) möglichst ohne zusätzliche bewegte, elektrische oder sonstige störungsanfällige Bauteile innerhalb des Werkzeugaggregats zu ermöglichen. Zu diesem Zweck ist erfindungsgemäß vorgesehen, dass das Werkzeugaggregat einen ersten Druckfluidkanal aufweist, der mit dem Hohlraum der Werkzeugaufnahme in Verbindung steht und in dem Hohlraum in einem Anlagebereich mündet, in welchem ein Bearbeitungswerkzeug im gespannten Zustand anliegt.

Auf diese Weise kann der Spannzustand eines eingewechselten Bearbeitungswerkzeuges überwacht werden, indem beispielsweise in dem ersten Druckfluidkanal ein Fluiddruck erzeugt und überprüft wird, ob im Anlagebereich des eingewechselten Bearbeitungswerkzeugs (d. h. im Mündungsbereich des ersten Druckfluidkanals) eine Leckage auftritt. Diese Überprüfung kann beispielsweise mittels einer Druckmesseinrichtung anhand eines Staudrucks durchgeführt werden, der sich je nach Leckage in dem ersten Druckfluidkanal aufbaut.

Dabei kann die Überprüfung problemlos auch außerhalb des eigentlichen Werkzeugaggregats erfolgen, beispielsweise in einer Zuleitung für das Druckfluid. Dies ist besonders vorteilhaft, da es sich erfindungsgemäß um ein einwechselbares Werkzeugaggregat handelt. Durch die Möglichkeit, die Überprüfung des Fluiddrucks außerhalb des eigentlichen Werkzeugaggregats auszuführen, wird die Konstruktion des Werkzeugaggregats vereinfacht, und die Druckmesseinrichtung kann auch für andere Zwecke bzw. Aggregate genutzt werden. Ferner muss an der Schnittstelle keine eigene Datenübertragung für die Überwachungsfunktion vorgesehen werden.

Weiterhin kann der erfindungsgemäße, erste Druckfluidkanal eine Reinigungsfunktion übernehmen, indem die Werkzeugaufnahme bei nicht eingewechseltem Bearbeitungswerkzeug durch das Druckfluid "ausgeblasen" werden kann. Dies trägt ebenso erheblich zu einem zuverlässigen und sicheren Spannen der Bearbeitungswerkzeuge bei.

Um das Ein- und Auswechseln der Bearbeitungswerkzeuge aus einem Werkzeugmagazin zu erleichtern sowie variierende Bearbeitungsrichtungen zu ermöglichen, ist gemäß einer Weiterbildung der Erfindung vorgesehen, dass die Werkzeugaufnahme des Werkzeugaggregats um eine von der ersten Achse abweichende, zweite Achse verschwenkbar ist.

Obgleich der erste Druckfluidkanal prinzipiell mit einer beliebigen Druckfluidquelle verbunden werden könnte, ist vorgesehen, dass der erste Druckfluidkanal auch mit der Schnittstelle des Werkzeugaggregats in Verbindung steht. Auf diese Weise kann der erste Druckfluidkanal problemlos und ohne zusätzliche Bauteile beispielsweise über eine Spindeleinheit mit Druckfluid versorgt werden, in welche das erfindungsgemäße Werkzeugaggregat eingewechselt ist.

Der Verlauf des ersten Druckfluidkanals innerhalb des Werkzeugaggregats kann im Rahmen der vorliegenden Erfindung prinzipiell frei gestaltet werden. Eine besonders einfache und wenig störungsanfällige Konstruktion ergibt sich jedoch, wenn der erste Druckfluidkanal gemäß einer Weiterbildung der Erfindung zumindest abschnittsweise durch eine Spindel verläuft, die eingerichtet ist, die Werkzeugaufnahme drehend anzutreiben. Hierdurch ergibt sich ein geradliniger und unmittelbarer Verlauf des ersten Druckfluidkanals hin zur Werkzeugaufnahme.

Dabei ist es besonders bevorzugt, dass die Spindel eine axiale Durchgangsöffnung aufweist, die in dem Hohlraum der Werkzeugaufnahme mündet, wobei im Bereich der Mündung der Durchgangsöffnung der Anlagebereich für ein Bearbeitungswerkzeug angeordnet ist. Hierdurch ergibt sich eine besonders einfache Konstruktion, bei welcher der erste Druckfluidkanal mit seinem Mündungsbereich keine zusätzlichen Bauteile erfordert, sondern lediglich eine axiale Durchgangsöffnung in der ohnehin vorhandenen Spindel vorgesehen werden muss.

Das Lösen des Halteelements zum Freigeben von Bearbeitungswerkzeugen in der Werkzeugaufnahme kann im Rahmen der vorliegenden Erfindung auf unterschiedlichste Art und Weise erfolgen. Im Hinblick auf eine einfach Konstruktion und ein sicheres Betätigen und Lösen des mindestens einen Haltelements hat es sich jedoch als vorteilhaft erwiesen, dass das erfindungsgemäße Werkzeugaggregat mindestens ein verschiebbar gelagertes Löseelement zum Beaufschlagen des mindestens einen Haltelements in einer Löserichtung zum Freigeben von Bearbeitungswerkzeugen in der Werkzeugaufnahme aufweist.

Dabei ist es besonders bevorzugt, dass das Löselement das Halteelement über die Spindel beaufschlagt, sodass das Löseelement nicht in dem eng begrenzten Bereich der Werkzeugaufnahme angeordnet werden muss, sondern an einer weiter entfernt gelegenen Stelle, an welcher ausreichend Platz vorhanden ist, ohne dass hierfür zusätzliche Bauteile erforderlich wären. Darüber hinaus besitzt diese Konstruktion den Vorteil, dass das Löseelement gemäß einer Weiterbildung der Erfindung derart mit der Spindel in Anlage bringbar ist, dass eine zweite Mündung der Durchgangsöffnung der Spindel (d.h. die Mündung der Durchgangsöffnung, welche dem Anlagebereich gegenüberliegt) nur mit dem ersten Druckfluidkanal in Fluidverbindung ist. Auf diese Weise kann der erste Druckfluidkanal zwischen einer offenen und einer geschlossenen Konfiguration umgeschaltet werden, wobei in der geschlossenen Konfiguration beispielsweise die oben genannten Funktionen zur Überprüfung des Spannzustandes des Bearbeitungswerkzeugs und zur Reinigung ausgeführt werden können, was anhand der ausführlichen Beschreibung bevorzugter Ausführungsformen noch besser ersichtlich werden wird.

Das Löseelement kann im Rahmen der vorliegenden Erfindung auf unterschiedliche Art und Weise betätigt bzw. verschoben werden, beispielsweise auch mittels eines Schnellantriebes, eines Elektromagneten oder dergleichen. Im Hinblick auf eine einfache Konstruktion und eine problemlose Ansteuerung des erfindungsgemäßen Werkzeugaggregats hat es sich jedoch als vorteilhaft erwiesen, dass es ferner einen zweiten Druckfluidkanal aufweist, der mit dem Löseelement in Verbindung steht, und zwar bevorzugt mit einer von der Spindel abgewandten Seite des Löseelements. Auf diese Weise lässt sich das Löseelement gezielt und sicher in Anlage mit der Spindel fahren, um diese und somit gegebenenfalls auch das mindestens eine Halteelement zu betätigen bzw. freizugeben.

Gemäß einer weiteren Zielrichtung stellt die vorliegende Erfindung eine Bearbeitungsvorrichtung nach Anspruch 8 bereit, die neben einem erfindungsgemäßen Werkzeugaggregat eine Spindeleinheit aufweist, in welche das Werkzeugaggregat eingewechselt werden kann. Dabei weist die Spindeleinheit ebenfalls eine Schnittstelle auf, die zur Kommunikation mit der Schnittstelle des Werkzeugaggregats eingerichtet ist. Hierdurch lassen sich die oben diskutierten, erfindungsgemäßen Vorteile in einem Komplettsystem erzielen.

Dabei ist es besonders bevorzugt, dass die Bearbeitungsvorrichtung eine Fluiddruckmesseinrichtung aufweist, die in dem ersten Druckfluidkanal des Werkzeugaggregats und/oder einem hiermit kommunizierenden Druckfluidkanal der Spindeleinheit vorgesehen ist. Mittels dieser Fluiddruckmesseinrichtung lässt sich die oben diskutierte Überprüfung der Spannfunktion des in der Werkzeugaufnahme gespannten Werkzeugs auf besonders einfache und zuverlässige Weise durchführen.

Gemäß einer Weiterbildung der Erfindung ist ferner vorgesehen, dass in dem zweiten Druckfluidkanal des Werkzeugaggregats zumindest während eines Überprüfungsbetriebs ein Fluidüberdruck herrscht, der auf das Löselement wirkt und so bemessen ist, dass das Löseelement mit der Spindel derart in Anlage ist, dass eine zweite Mündung der Durchgangsöffnung nur mit dem ersten Druckfluidkanal in Fluidverbindung ist, während das mindestens eine Halteelement weiterhin ein Bearbeitungswerkzeug bzw. einen Werkzeugadapter spannt.

Bei dieser Konfiguration können der erste Druckfluidkanal und der zweite Druckfluidkanal gezielt zusammenwirken, um die erfindungsgemäße Überprüfung des Spannzustandes des Werkzeugs zu ermöglichen. Dabei ist folgender technischer Zusammenhang zu berücksichtigen. Während eines Bearbeitungsvorganges rotiert die Spindel des Werkzeugaggregats mit extrem hohen Drehzahlen, sodass sie möglichst weitgehend von anderen Bauteilen des Werkzeugaggregats (wie beispielsweise dem Löseelement) entkoppelt sein sollte. Dies führt jedoch dazu, dass während des Bearbeitungsbetriebes in vielen Fällen kein durchgängiger ersten Druckfluidkanal durch die Spindel hindurch gebildet werden kann. Bei Stillstand der Spindel, beispielsweise während eines Werkzeugwechselvorganges oder eines Überprüfungsbetriebes, kann hingegen das Löseelement mit der Spindel in Anlage gebracht werden, um so nicht nur die Spindel zu betätigen, sondern gleichzeitig auch einen geschlossenen ersten Druckfluidkanal zu bilden, der für die oben genannten Funktionen (insbesondere Überprüfung des Spannzustandes und Reinigung) genutzt werden kann.

Diese unterschiedlichen Konfigurationen können durch die vorgenannte bevorzugte Ausführungsform der vorliegenden Erfindung besonders wirksam verwirklicht werden, obgleich die vorliegende Erfindung nicht hierauf beschränkt ist.

### Kurze Beschreibung der Zeichnungen

- Fig. 1: zeigt schematisch eine Perspektivansicht eines Werkzeugaggregats als bevorzugte Ausführungsform der vorliegenden Erfindung.
- Fig. 2: zeigt schematisch eine weitere Perspektivansicht des in Fig. 1 gezeigten Werkzeugaggregats;
- Fig. 3: zeigt schematisch eine Schnittansicht des in Fig. 1 und Fig. 2 gezeigten Werkzeugaggregats, die entlang einer Spindelachse des Werkzeugaggregats geführt ist;
- Fig. 4: zeigt schematisch eine vergrößerte Teilansicht aus Fig. 3 im Bereich der Werkzeugaufnahme.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

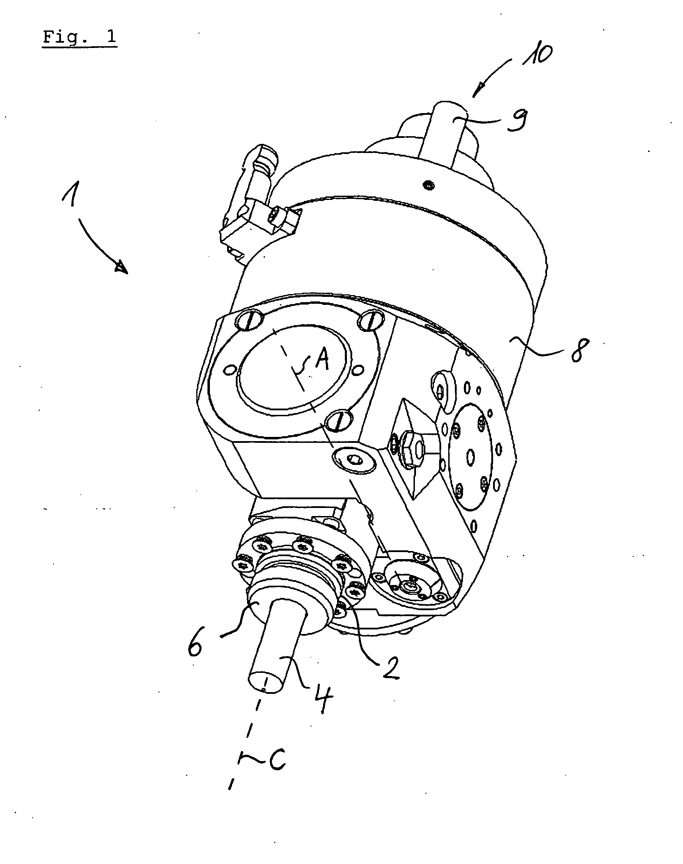

Ein einwechselbares Werkzeugaggregat 1 als bevorzugte Ausführungsform der vorliegenden Erfindung ist schematisch in Fig. 1 bis Fig. 4 in verschiedenen Ansichten gezeigt. Das Werkzeugaggregat 1 dient zum Bearbeiten von Werkstücken, die beispielsweise zumindest abschnittsweise aus Holz, Holzwerkstoffen, Kunststoff oder dergleichen bestehen, wie sie beispielsweise im Bereich der Möbelindustrie häufig zum Einsatz kommen. Dabei kann das Werkzeugaggregat beispielsweise spanende Bearbeitungen wie Bohren, Fräsen oder dergleichen ausführen, wobei das Werkzeugaggregat 1 in der vorliegenden Ausführungsform mit einem Bohrer 4 als Bearbeitungswerkzeug gezeigt ist. Der Bohrer 4 ist in der vorliegenden Ausführungsform in einen Werkzeugadapter 6 eingesetzt, der wiederum in eine Werkzeugaufnahme 2 des Werkzeugaggregats 1 ein- bzw. auswechselbar ist. Es ist jedoch zu beachten, dass das Werkzeugaggregat 1 auch eingerichtet sein kann, um unmittelbar entsprechende Bearbeitungswerkzeuge 4 aufzunehmen.

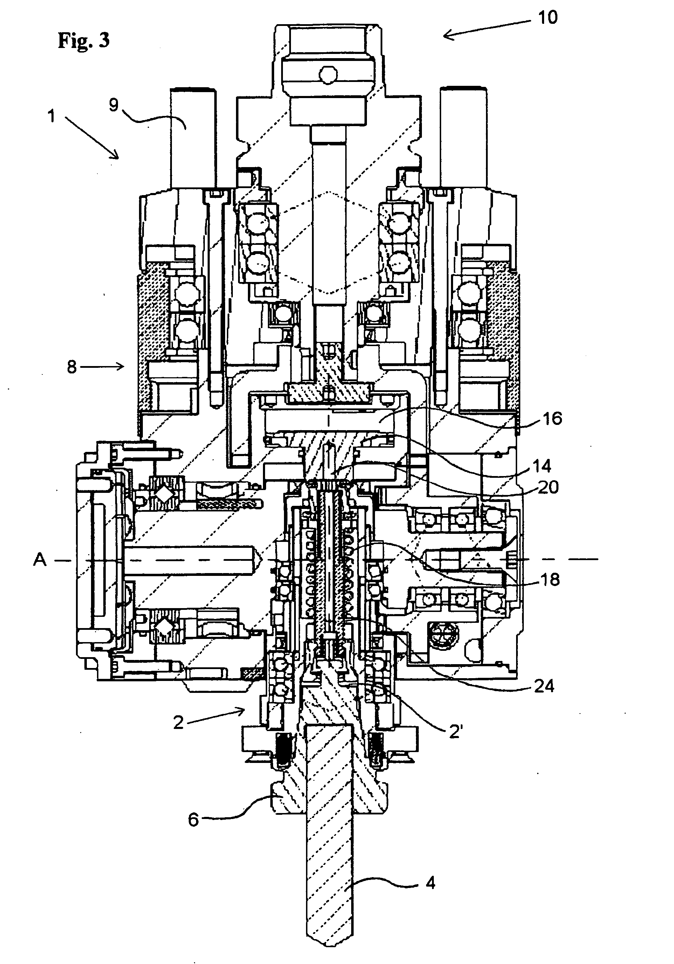

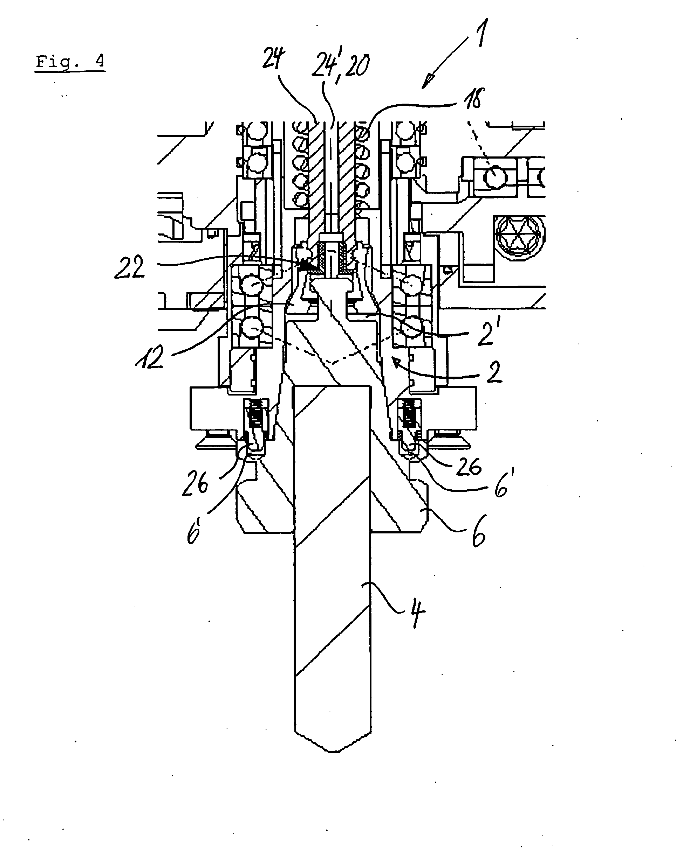

Die Werkzeugaufnahme 2 ist in dem Werkzeugaggregat 1 derart gelagert, dass sie in Bezug auf einen Grundkörper 8 des Werkzeugaggregats um eine erste Achse C drehend antreibbar und darüber hinaus um eine hiervon abweichende, zweite Achse A verschwenkbar ist, wobei die Schwenkbarkeit um die zweite Achse A optional ist, um verschiedene Bearbeitungsrichtungen zu ermöglichen und das Ein- und Auswechseln von Bearbeitungswerkzeugen 4 zu erleichtern. Dabei ist die Werkzeugaufnahme erfindungsgemäß nach Art eines Steilkegels ausgebildet (vgl. Fig. 3 und Fig. 4). Dies ermöglicht beispielsweise gegenüber einer HSK-Aufnahme eine geringere Baulänge des Aggregats mit Werkzeug, da das Werkzeug bereits im Bereich des Kegels gespannt werden kann.

Im Bereich der Einführöffnung der Werkzeugaufnahme 2 gefedert gelagerte Druckstifte 26 vorgesehen. Diese können in entsprechende Ausnehmungen 6' eines Werkzeugadapters 6 eingreifen und ermöglichen so eine sichere, formschlüssige Übertragung des Antriebsdrehmomentes von der Werkzeugaufnahme 2 auf den Werkzeugadapter 6.

Ferner sind in der Werkzeugaufnahme 2 Halteelemente 12 zum Halten des jeweiligen Bearbeitungswerkzeugs 4 in der Werkzeugaufnahme angeordnet, die in Richtung der C-Achse (von oben nach unten in Fig. 3) bewegbar sind. Dabei weisen die Halteelemente 12 nasenartige Vorsprünge auf, die mit einem pilzartigen Vorsprung der Werkzeugaufnahme 6 bzw. eines entsprechenden Werkstücks 4 in Eingriff bringbar sind, um das Werkzeug 4 bzw. die Werkzeugaufnahme 6 sicher zu halten. Es ist jedoch zu beachten, dass die genaue Ausgestaltung und Anordnung der Halteelemente 12 im Rahmen der vorliegenden Erfindung vielfältig variieren kann.

Die Halteelemente 12 sind mit einer Spindel 24 verbunden, die eingerichtet ist, die Werkzeugaufnahme 2 drehend anzutreiben. Die Halteelemente 12 können über die Spindel 24 in einer Richtung beaufschlagt werden, in welcher sie in einen Spanneingriff mit dem Werkzeug 4 bzw. der Werkzeugaufnahme 6 kommen (von unten nach oben in Fig. 3 bzw. Fig. 4), wobei zu diesem Zweck eine Schraubenfeder 18 vorgesehen ist.

Die Spindel 24 weist eine axiale Durchgangsöffnung 24' auf, die an ihrem einen Ende in dem Hohlraum 2' mündet, und zwar in einem Anlagebereich 22 für das Bearbeitungswerkzeug 4 bzw. dem Werkzeugadapter 6. D.h., im gespannten Zustand des Bearbeitungswerkzeugs 4 bzw. des Werkzeugadapters 6 ist die Mündung der Durchgangsöffnung 24' durch diese verschlossen.

Das gegenüberliegende Ende der Durchgangsöffnung 24' endet unterhalb eines verschiebbar gelagerten Löseelements (Lösekolbens) 14, wobei die Verschiebbarkeit des Löseelements 14 derart ausgelegt ist, dass das Löseelement 14 die Spindeleinheit 24 in einer Löserichtung (von oben nach unten in Fig. 3 und Fig. 4) zum Freigeben der Bearbeitungswerkzeuge 4 bzw. Werkzeugadapter 6 beaufschlagen kann, und dass sich das Löseelement 14 auch von der Spindel 24 trennen kann.

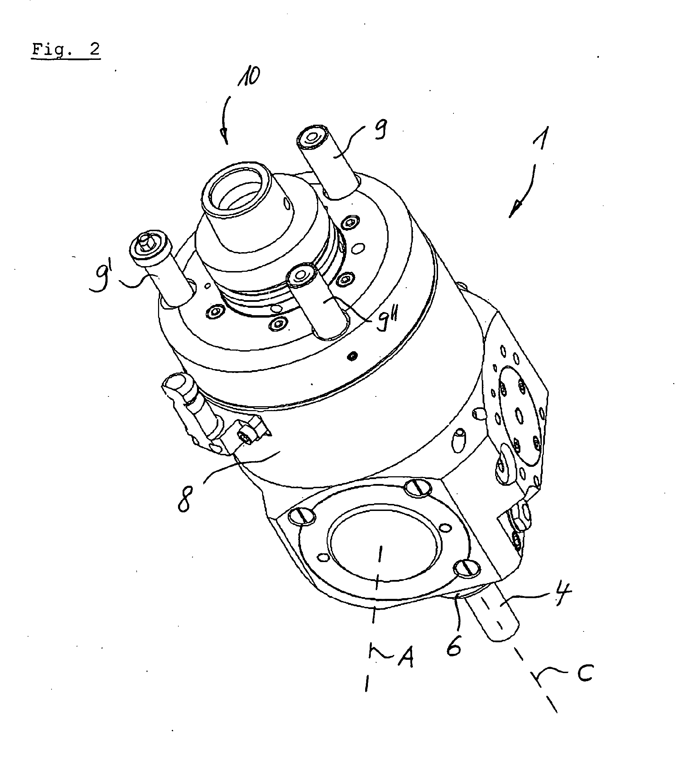

Die Durchgangsöffnung 24' ist Teil eines ersten Druckfluidkanals 20, der mit dem Hohlraum 2' der Werkzeugaufnahme 2 in Verbindung steht und in dem Hohlraum 2' in dem Anlagebereich 22 mündet, in welchem das Bearbeitungswerkzeug 4 bzw. der Werkzeugadapter 6 im gespannten Zustand anliegt. Von dort erstreckt sich der Druckfluidkanal 20 durch die Durchgangsöffnung 24' und einen unterhalb des Lösekolbens 14 gebildeten Raum bis hin zu einem Druckfluidanschluss 9 einer Schnittstelle 10, die in Fig. 1 und Fig. 2 am besten zu erkennen sind.

Darüber hinaus weist das Werkzeugaggregat einen zweiten Druckfluidkanal 16 auf, der sich von einem Raum oberhalb des Löseelements 14 bis hin zu einem Druckfluidanschluss 9' der Schnittstelle 10 erstreckt (vgl. Fig. 2 und Fig. 3). Das Löseelement 14 grenzt somit sowohl an den ersten Druckfluidkanal 20 als auch an den zweiten Druckfluidkanal 16 an, wobei der erste Druckfluidkanal 20 in der vorliegenden Ausführungsform unterhalb des Löseelements 14 verläuft, während der zweite Druckfluidkanal 16 oberhalb des Löseelements 14 endet.

Ferner besitzt das erfindungsgemäße Werkzeugaggregat, wie bereits erwähnt, eine Schnittstelle 10, die eingerichtet ist, beispielsweise mit einer passenden Schnittstelle einer Spindeleinheit oder eines ähnliches Aggregats zu kommunizieren. Dabei kann die Schnittstelle auf unterschiedliche Art und Weise ausgestaltet bzw. zur Übertragung unterschiedlicher Größen zwischen der externen Einheit und dem Werkzeugaggregat eingerichtet sein, wobei die Größen bevorzugt ausgewählt sind aus Drehantrieb, elektrischer Energie, Druckfluid und Taten.

Obgleich in den Figuren nicht näher gezeigt, weist das erfindungsgemäße Werkzeugaggregat ferner einen Mechanismus zum Verschwenken der Werkzeugaufnahme um die zweite Achse A bei Aufbringen eines Drehmoments im Bereich der Schnittstelle auf. In diesem Zusammenhang kann das Werkzeugaggregat ferner einen dritten Druckfluidkanal (nicht gezeigt) besitzen, der mit dem Druckfluidanschluss 9" der Schnittstelle 10 in Verbindung steht und dazu eingesetzt wird, bei Bedarf eine in dem Werkzeugaggregat vorgesehene Bremse zu lösen, welche die Werkzeugaufnahme in ihrer Schwenkposition um die zweite Achse A festsetzt.

Obgleich in den Figuren ebenfalls nicht gezeigt, lässt sich das erfindungsgemäße Werkzeugaggregat besonders vorteilhaft in eine Spindeleinheit einwechseln, die ebenfalls eine Schnittstelle aufweist, welche zur Kommunikation mit der Schnittstelle 10 des Werkzeugaggregats 1 eingerichtet ist.

Dabei werden auch die Druckfluidanschlüsse 9, 9' und 9" mit entsprechenden Druckfluidanschlüssen der Schnittstelle der Spindeleinheit verbunden. Erfindungsgemäß ist nun entweder in dem ersten Druckfluidkanal 20 selbst oder in einem hiermit kommunizierenden Druckfluidkanal der Spindeleinheit eine Fluiddruckmesseinrichtung (nicht gezeigt) vorgesehen, die eine einfache und sichere Überprüfung des Spannzustandes von Bearbeitungswerkzeugen 4 bzw. Werkzeugadaptern 6 in der Werkzeugaufnahme 2 ermöglicht, was untenstehend noch näher erläutert wird.

Schließlich besitzt die erfindungsgemäße Bearbeitungsvorrichtung mindestens ein Werkzeugmagazin (nicht gezeigt), auf welches das Werkzeugaggregat 1 zum Ein- oder Auswechseln von Bearbeitungswerkzeugen 4 bzw. Werkzeugadaptern 6 zugreifen kann.

Der Betrieb der erfindungsgemäßen Bearbeitungsvorrichtung bzw. des erfindungsgemäßen Bearbeitungsaggregats wird nachfolgend beschrieben.

Vor dem Einwechseln eines Bearbeitungswerkzeugs 4 bzw. Werkzeugadapters 6 wird zunächst der zweite Druckfluidkanal 16 mit Druckfluid gefüllt, wodurch das Löseelement 14 in Freigaberichtung (von oben nach unten in Fig. 3) bewegt wird und die Spindel 24 in Freigaberichtung beaufschlagt, sodass die Halteelemente 12 in eine Freigabeposition (nicht gezeigt) bewegt werden, in welcher ein Werkzeugadapter 6 eingesetzt werden kann. Durch das Anlegen des Löseelements 14 an die Spindel 24 wird ein durchgängiger erster Druckfluidkanal 20 gebildet. Dieser kann nun mit Druckfluid beaufschlagt werden, um zunächst die Werkzeugaufnahme 2 und insbesondere auch den Anlagebereich 22 zu reinigen.

Nun kann eine Werkzeugaufnahme 6 mit Bearbeitungswerkzeug 4 in die Werkzeugaufnahme 2 eingewechselt werden, wobei der pilzartige Vorsprung am oberen Ende (in Fig. 4) des Werkzeugadapters 6 in dem Bereich zwischen den Halteelementen 12 gebracht wird. Daraufhin wird der Druck in dem zweiten Druckfluidkanal 16 abgesenkt, sodass sich das Löseelement 14 unter der Wirkung der Feder 18 entgegen der Freigaberichtung (von unten nach oben in Fig. 3) bewegt. Im Zuge dieser Bewegung greifen die Halteelemente 12 den pilzartigen Vorsprung des Werkzeugadapters 6 ziehen diesen in die Werkzeugaufnahme 2, bis der pilzartige Vorsprung mit dem Anlagebereich 22 in Anlage kommt.

Löst man nun das Löseelement 14 vollständig von der Spindel 24, indem der Druck in dem zweiten Druckfluidkanal 16 entsprechend abgesenkt wird, ist das Werkzeugaggregat betriebsbereit.

Um zu überprüfen, ob der Werkzeugadapter 6 mit dem Bearbeitungswerkzeug 4 sicher in der Werkzeugaufnahme 2 gespannt ist, kann nun erneut ein Druck in dem zweiten Druckfluidkanal 16 aufgebaut werden der auf das Löseelement 14 wirkt und so bemessen ist, dass das Löseelement 14 mit der Spindel 24 derart in Anlage ist, dass die zweite Mündung der Durchgangsöffnung 24' nur mit dem ersten Druckfluidkanal 20 in Fluidverbindung ist, während die Halteelemente 12 weiterhin den Werkzeugadapter 6 spannen.

Nun wird Druckfluid in den ersten Druckfluidkanal 20 zugeführt. Falls der Werkzeugadapter 6 angemessen gespannt ist und somit die untere Mündung der Durchgangsöffnung 24' verschließt, baut sich in dem ersten Druckfluidkanal 20 ein Staudruck auf. Aus diesem Staudruck kann darauf geschlossen werden, dass der Werkzeugadapter 6 angemessen gespannt ist bzw. nicht angemessen gespannt ist. Nach Abschluss dieses Überprüfungsbetriebes kann der Fluiddruck in beiden der Fluiddruckkanälen 16, 20 abgelassen werden, woraufhin sich das Löseelement 14 von der Spindel 24 löst und der Bearbeitungsbetrieb der Spindel zusammen mit dem Bearbeitungswerkzeug 4 begonnen werden kann.

## Patentansprüche

1. Einwechselbares Werkzeugaggregat (1) zum Bearbeiten von Werkstücken, die bevorzugt zumindest abschnittsweise aus Holz, Holzwerkstoffen, Kunststoff oder dergleichen bestehen, mit:
einer Werkzeugaufnahme (2) mit einem Hohlraum (2') zum Aufnehmen von Bearbeitungswerkzeugen (4) bzw. Werkzeugadaptern (6), wobei die Werkzeugaufnahme (2) in Bezug auf einen Grundkörper (8) des Werkzeugaggregats um eine erste Achse (C) drehend antreibbar ist,
einer Schnittstelle (10) zum Einwechseln des Werkzeugaggregats in eine Schnittstelle einer Spindeleinheit, und
mindestens einem bewegbar gelagerten Halteelement (12) zum Halten von Bearbeitungswerkzeugen (4) bzw. Werkzeugadaptern (6) in der Werkzeugaufnahme (2),
**dadurch gekennzeichnet, dass**
das Werkzeugaggregat einen ersten Druckfluidkanal (20) aufweist, der mit dem Hohlraum (2') der Werkzeugaufnahme (2) in Verbindung steht und in dem Hohlraum (2') in einem Anlagebereich (22) mündet, in welchem ein Bearbeitungswerkzeug (4) bzw. Werkzeugadapter (6) im gespannten Zustand anliegt, und der Druckfluidkanal (20) ferner auch mit der Schnittstelle (10) des Werkzeugaggregats in Verbindung steht.

2. Werkzeugaggregat nach Anspruch 1, **dadurch gekennzeichnet, dass** die Werkzeugaufnahme um eine von der ersten Achse (C) abweichende, zweite Achse (A) verschwenkbar ist.

3. Werkzeugaggregat nach Anspruch 1 oder 2, **dadurch gekennzeichnet, dass** der erste Druckfluidkanal (20) zumindest abschnittsweise durch eine Spindel (24) verläuft, die eingerichtet ist, die Werkzeugaufnahme (2) drehend anzutreiben.

4. Werkzeugaggregat nach Anspruch 3, **dadurch gekennzeichnet, dass** die Spindel (24) eine axiale Durchgangsöffnung (24') aufweist, die in dem Hohlraum (2') mündet, wobei im Bereich der Mündung der Durchgangsöffnung (24') der Anlagebereich (22) für ein Bearbeitungswerkzeug (4) bzw. einen Werkzeugadapter (6) angeordnet ist.

5. Werkzeugaggregat nach einem der vorhergehenden Ansprüche, **dadurch gekennzeichnet, dass** es mindestens ein verschiebbar gelagertes Löseelement (14) zum Beaufschlagen des mindestens einen Halteelements (12) in einer Löserichtung zum Freigeben von Bearbeitungswerkzeugen (4) bzw. Werkzeugadaptern (6) in der Werkzeugaufnahme (2) aufweist.

6. Werkzeugaggregat nach Anspruch 5, **dadurch gekennzeichnet, dass** das Löseelement (14) das Halteelement (12) über die Spindel (24) beaufschlagt.

7. Werkzeugaggregat nach Anspruch 6, **dadurch gekennzeichnet, dass** das Löseelement derart mit der Spindel (24) in Anlage bringbar ist, dass eine zweite Mündung der Durchgangsöffnung (24') nur mit dem ersten Druckfluidkanal in Fluidverbindung ist.

8. Werkzeugaggregat nach einem der Ansprüche 5 bis 7, **dadurch gekennzeichnet, dass** das Werkzeugaggregat ferner einen zweiten Druckfluidkanal (16) aufweist, der mit dem Löseelement (14) in Verbindung steht.

9. Werkzeugaggregat nach Anspruch 8, **dadurch gekennzeichnet, dass** der zweite Druckfluidkanal (16) mit einer von der Spindel (24) abgewandten Seite des Löseelements (14) in Verbindung steht.

10. Werkzeugaggregat nach einem der vorhergehenden Ansprüche, bei dem das Haltelement verschiebbar gelagert ist.

11. Bearbeitungsvorrichtung zum Bearbeiten von Werkstücken, die bevorzugt zumindest abschnittsweise aus Holz, Holzwerkstoffen, Kunststoff oder dergleichen bestehen, mit:
einem einwechselbaren Werkzeugaggregat (1) nach einem der vorhergehenden Ansprüche, und
einer Spindeleinheit, in welche das Werkzeugaggregat (1) eingewechselt werden kann und die eine Schnittstelle aufweist, die zur Kommunikation mit der Schnittstelle (10) des Werkzeugaggregats (1) eingerichtet ist.

12. Bearbeitungsvorrichtung nach Anspruch 11, **dadurch gekennzeichnet, dass** sie eine Fluiddruckmesseinrichtung aufweist, die in dem ersten Druckfluidkanal (20) des Werkzeugaggregats (1) und/oder einem hiermit kommunizierenden Druckfluidkanal der Spindeleinheit vorgesehen ist.

13. Bearbeitungsvorrichtung nach Anspruch 11 oder 12 in Verbindung mit zumindest Anspruch 6, **dadurch gekennzeichnet, dass** in dem zweiten Druckfluidkanal (16) des Werkzeugaggregats zumindest während eines Überprüfungsbetriebes ein Fluidüberdruck herrscht, der auf das Löseelement (14) wirkt und so bemessen ist, dass das Löseelement (14) mit der Spindel (24) derart in Anlage ist, dass eine zweite Mündung der Durchgangsöffnung (24') nur mit dem ersten Druckfluidkanal in Fluidverbindung ist, während das mindestens eine Halteelement (12) weiterhin ein Bearbeitungswerkzeug (4) bzw. einen Werkzeugadapter (6) spannt.

## Claims

1. Interchangeable tool assembly (1) for working workpieces which are preferably in at least one section made of timber, derived timber products, synthetic material or the like, having:
a tool holder (2) having a cavity (2') for receiving working tools (4) or tool adapters (6), the tool holder (2) being rotatable about a first axis (C) in relation to a base body (8) of the tool assembly,
an interface (10) for converting the tool assembly to an interface of a spindle unit, and
at least one movably mounted holding element (12) for holding working tools (4) or tool adapters (6) in the tool holder (2),
**characterised in that**
the tool assembly has a first compressed-fluid channel (20) which is connected to the cavity (2') of the tool holder (2) and opens out in the cavity (2') in a contact region (22) in which a working tool (4) or tool adapter (6) is in contact in the clamped state, and the compressed-fluid channel (20) is further also connected to the interface (10) of the tool assembly.

2. Tool assembly according to claim 1, **characterised in that** the tool holder is pivotable about a second axis (A) different to the first axis (C).

3. Tool assembly according to claim 1 or 2, **characterised in that** the first compressed-fluid channel (20) runs in at least one section through a spindle (24) which is designed to rotate the tool holder (2).

4. Tool assembly according to claim 3, **characterised in that** the spindle (24) has an axial through-opening (24') which opens out in the cavity (2'), the contact region (22) for a working tool (4) or tool adapter (6) being arranged in the region of the opening of the through-opening (24').

5. Tool assembly according to any of the preceding claims, **characterised in that** it has at least one slidably mounted release element (14) for acting on the at least one holding element (12) in a direction of release for the release of working tools (4) or tool adapters (6) in the tool holder (2).

6. Tool assembly according to claim 5, **characterised in that** the release element (14) acts on the holding element (12) via the spindle (24).

7. Tool assembly according to claim 6, **characterised in that** the release element can be brought into contact with the spindle (24) in such a way that a second opening of the through-opening (24') is in fluid communication only with the first compressed-fluid channel.

8. Tool assembly according to any of claims 5 to 7, **characterised in that** the tool assembly further has a second compressed-fluid channel (16) which is in communication with the release element (14).

9. Tool assembly according to claim 8, **characterised in that** the second compressed-fluid channel (16) is in communication with one side of the release element (14) remote from the spindle (24).

10. Tool assembly according to any of the preceding claims, in which the holding element is mounted slidably.

11. Working apparatus for working workpieces which are preferably in at least one section made of timber, derived timber products, synthetic material or the like having:
an interchangeable tool assembly (1) according to any of the preceding claims, and
a spindle unit to which the tool assembly (1) can be converted and which has an interface which is designed for communication with the interface (10) of the tool assembly (1).

12. Working apparatus according to claim 11, **characterised in that** it has a fluid pressure measuring device which is provided in the first compressed-fluid channel (20) of the tool assembly (1) and/or a compressed-fluid channel of the spindle unit communicating therewith.

13. Working apparatus according to claim 11 or 12 in conjunction with at least claim 6, **characterised in that** in the second compressed-fluid channel (16) of the tool assembly, at least during a testing mode, prevails a fluid overpressure which acts on the release element (14) and has dimensions such that the release element (14) is in contact with the spindle (24) in such a way that a second opening of the through-opening (24') is in fluid communication only with the first compressed-fluid channel, while the at least one holding element (12) continues to clamp a working tool (4) or tool adapter (6).

## Revendications

1. Ensemble d'outils (1) interchangeable, pour l'usinage de pièces d'oeuvre, de préférence composées, au moins par tronçons, de bois, matériaux ligneux, matière synthétique ou analogue, avec :
un réceptacle à outil (2) avec un espace creux (2'), pour recevoir des outils d'usinage (4), ou des adaptateurs à outils (6), sachant que le réceptacle à outil (2) est susceptible d'être entraîné en rotation par rapport à un cors de base (8) de l'ensemble d'outils, autour d'un premier axe (C),
une interface (10) pour interchanger l'ensemble d'outils dans une interface d'une unité à broche, et
au moins un élément de maintien (12) monté de manière à être déplaçable, pour assurer le maintien d'outils d'usinage (4), ou d'adaptateurs à outils (6), dans le réceptacle à outil (2),
**caractérisé en ce que**
l'ensemble d'outils présente un premier canal à fluide sous pression (20), relié à l'espace creux (2') du réceptacle à outil (2) et débouchant dans l'espace creux (2'), dans une zone d'appui (22), dans laquelle un outil d'usinage (4), ou adaptateur à outils (6) s'appuie, à l'état serré, et le canal à fluide sous pression (20) étant en outre relié à l'interface (10) de l'ensemble d'outils.

2. Ensemble d'outils selon la revendication 1, **caractérisé en ce que** le réceptacle à outil est susceptible de pivoter autour d'un deuxième axe (A), s'écartant du premier axe (C).

3. Ensemble d'outils selon la revendication 1 ou 2, **caractérisé en ce que** le premier canal à fluide sous pression (20) s'étend, au moins par tronçons, à travers une broche (24), agencée pour entraîner en rotation le réceptacle à outil (2).

4. Ensemble d'outils selon la revendication 3, **caractérisé en ce que** la broche (24) présente une ouverture de passage (24') axiale, débouchant dans l'espace creux (2'), la zone d'appui (22) pour un outil d'usinage (4), ou un adaptateur à outils (6), étant disposée dans la zone de l'embouchure de l'ouverture de passage (24').

5. Ensemble d'outils selon l'une des revendications précédentes, **caractérisé en ce qu'**il présente au moins un élément de desserrement (14) monté de manière déplaçable, pour solliciter le au moins un élément de maintien (12) dans une direction de desserrement, de manière à libérer des outils d'usinage (4), ou adaptateurs à outils (6), situés dans le réceptacle à outil (2).

6. Ensemble d'outils selon la revendication 5, **caractérisé en ce que** l'élément de desserrement (14) sollicite l'élément de maintien par l'intermédiaire de la broche (24).

7. Ensemble d'outils selon la revendication 6, **caractérisé en ce que** l'élément de desserrement est susceptible d'être mis en appui avec la broche (24), de manière qu'une deuxième embouchure de l'ouverture de passage (24') ne soit en liaison hydraulique qu'avec le premier canal à fluide sous pression.

8. Ensemble d'outils selon l'une quelconque des revendications 5 à 7, **caractérisé en ce que** l'ensemble d'outils présente en outre un deuxième canal à fluide sous pression (16), relié à l'élément de desserrement (14).

9. Ensemble d'outils selon la revendication 8, **caractérisé en ce que** le deuxième canal à fluide sous pression (16) est relié à un côté, opposé à la broche (24), de l'élément de desserrement (14).

10. Ensemble d'outils selon l'une des revendications précédentes, pour lequel l'élément de maintien est monté de manière déplaçable.

11. Dispositif d'usinage, pour l'usinage de pièces d'oeuvre, de préférence composées, au moins par tronçons, de bois, matériaux ligneux, matière synthétique ou analogue, avec :
un ensemble d'outils (1) interchangeable selon l'une des revendications précédentes, et
une unité à broche, dans laquelle l'ensemble d'outils (1) peut être échangé et présentant une interface, agencée pour la communication avec l'interface (10) de l'ensemble d'outils (1).

12. Dispositif d'usinage selon la revendication 11, **caractérisé en ce qu'**il présente un dispositif de mesure de pression de fluide, prévu dans le premier canal à fluide sous pression (20) de l'ensemble d'outils (1) et/ou dans un canal à fluide sous-pression, communiquant avec lui, de l'unité à broche.

13. Dispositif d'usinage selon la revendication 11 ou 12, en liaison avec au moins la revendication 6, **caractérisé en ce que**, dans le deuxième canal à fluide sous pression (16) de l'ensemble d'outils, règne, pendant un fonctionnement de vérification, une surpression de fluide, agissant sur l'élément de desserrement (14) et de valeur telle que l'élément de desserrement (14) est en appui avec la broche, de manière qu'une deuxième embouchure de l'ouverture de passage (24') ne soit en liaison hydraulique qu'avec le premier canal à fluide sous pression, tandis que le au moins un élément de maintien (12) serre en outre un outil d'usinage (4), ou un adaptateur à outils (6).
